# EUROPEAN PATENT SPECIFICATION

(11) **EP 1 056 564 B1**
(45) Date of publication and mention of the grant of the patent: **02.04.2003**
(21) Application number: 97954250.3
(22) Date of filing: 24.12.1997
(51) Int. Cl.: B23H 7/26, B23Q 16/08

(54) **EDM TOOL HOLDER**
WERKZEUGHALTER FÜR FUNKENEROSIONSVORRICHTUNG
SUPPORT D'OUTIL D'USINAGE PAR ELECTROEROSION

(43) Date of publication of application: 06.12.2000
(73) Proprietor: Precision Die & Machine Company, St. Clair, MI 48079 (US)
(72) Inventor: LOZON, Robert, J., St. Clair, MI 48079 (US); OLSZEWSKI, Edward, C., Smith Creek, MI 48074 (US)
(74) Representative: Lemke, Jörg-Michael, Dipl.-Ing.
(86) International application number: US9723942
(87) International publication number: WO99033601

(56) References cited:
- US-A- 4 621 821
- US-A- 4 815 780
- US-A- 4 855 558
- US-A- 4 876 429

## Description

### Technical Field

This invention relates to tool holders for EDM tooling.

### Background Of The Invention

Several patents have issued since the commercial success of electric discharge machining (hereinafter "EDM") relating to the devices which can hold EDM tooling so that it may be repeatable placed in operable position in the EDM machine and removed therefrom. Typically such devices which are herein termed "tool holders", may be repetitively positioned with great accuracy in and thereafter removed from the EDM machine many times during the course of a production run.

In the present state of the art, EDM tooling, also sometimes referred to as EDM electrodes, is formed from stock which is mounted in a tool holder, the tooling is then created, and thereafter remains with the holder throughout the useful life of the tooling. The tooling is created in the tool holder to avoid the problem of accurately positioning the tooling in the proper X, Y and Z orientations in the tool holder. The tool holder has certain locating devices that enables the holder (and in turn the tooling) to be repeatable positioned very accurately in the EDM machine. Thus, for each EDM tool, there is a tool holder. Tool holders of the prior art useable in EDM machines are shown in the following representative U.S. patents: 4,621,821; 4,815,780; 4,855,558; 5,065,991; 5,415,382.

Presently, EDM tool holders are machined of metal. Such holders typically sell for $40.00 or more. As there must be one such holder for each EDM tool, users of such tooling tie up substantial monies just in the cost of the holders. Accordingly, inventory costs merely for tool holders become a significant item in a company's tooling inventory.

In addition to involving significant inventory costs, the prior art tool holders are made up of a collection of individual parts. For example, in the case of U.S. Patent No. 4,815,780, there is a centering disk 13 which is held to the surface of a mounting plate 6 of the tool holder 2 by four screws 51. The manufacture and assembly of these separate pieces not only is expensive but should this plate shift as a result of the tool holder being bumped, a $60,000 die being machined may be ruined because the tool holder was not positioned accurately in the EDM machine when it made its cut in the die. U.S. Patent No. 5,065,991 discloses a generally similar centering disk and the same shortcomings are present in such arrangement.

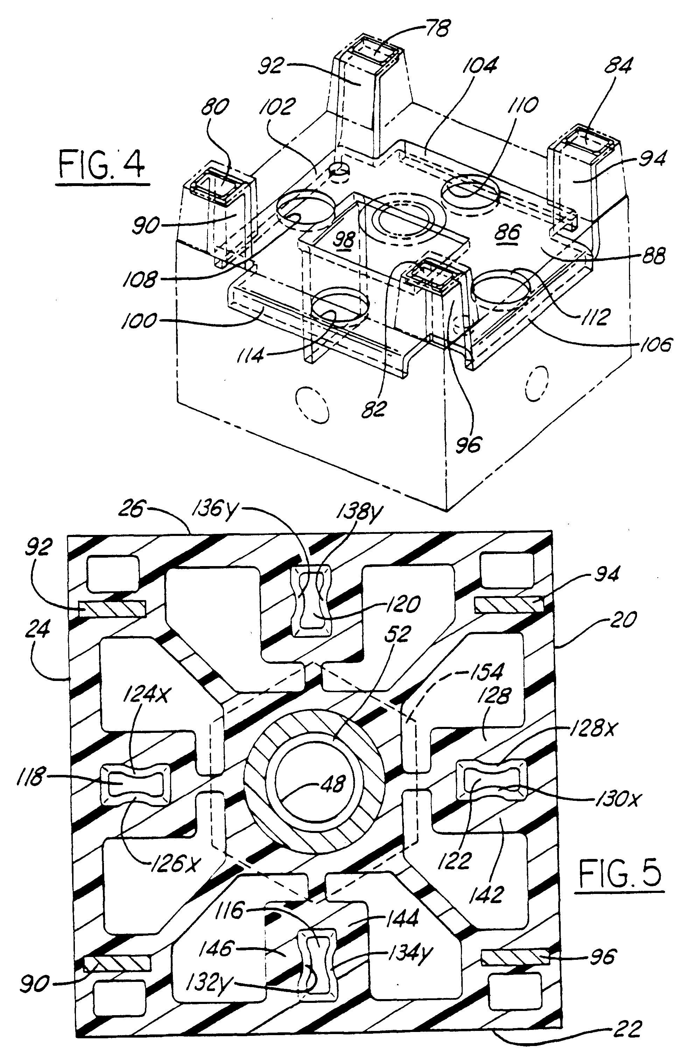

In U.S. Patent No. 4,855,558, tool holder 2 is made of metal and has four machined slots in the upper surface 30 and the flanks are cut to provide slightly bowed recesses such as at 37b as shown in Figure 4 so that when the rail 68 of the chuck 1 is drawn into the slot, the lip 38d deflects downwardly along the Z-axis. Forming the downwardly bowed recesses involves difficult machining, raising the cost of the tool holders.

### Summary Of The Invention

We have developed a tool holder construction that reduces the cost of EDM tool holders to a fraction of today's cost and substantially reduces the likelihood that an accidental bumping of the tool holder will upset the accuracy of its positioning when inserted in the EDM machine.

Instead of fabricating the tool holders of metal involving the machining and assembly of several parts, we make the tool holder by injection molding an appropriate plastic having insert-molded therein electrical conductors or any other parts which are desirably formed of metal.

Accuracy in repeated positioning of the tool holder is accomplished by utilizing the inherent flexibility of the plastic material of which the holder is formed to design positioning devices which provide extreme accuracy in X, Y and Z directions. Thus, unlike the prior art tool holders which comprise an assembly of parts that may later shift if the tool holder is accidentally bumped, or which require intricate machining for each holder increasing production costs of the holder, our tool holder is essentially one piece and there is no significant risk that parts may accidentally shift, destroying accuracy of the holder.

### Description Of The Drawings

FIGURE 1 is a side elevation view of our improved tool holder mounted on the chuck of an EDM machine;
FIGURE 2 is a top perspective view of our improved tool holder;
FIGURE 3 is a bottom perspective view of our improved tool holder;
FIGURE 4 is a top perspective view similar to Figure 2 except the tool holder is shown in phantom outline, while the electric conductor is shown in solid outline;
FIGURE 5 is a cross-sectional view taken on the line 5-5 of Figure 2;
FIGURE 6 is a cross-sectional view taken on the line 6-6 of Figure 1;
FIGURE 7 is a cross-sectional view taken on the line 7-7 of Figure 1;
FIGURE 8 is a cross-sectional view taken on the line 8-8 of Figure 7;
FIGURE 9 is a top view of our improved tool holder in accordance with an alternative embodiment of the present invention;
FIGURE 10 is a cross-sectional view taken on the line 10-10 of Figure 9;
FIGURE 11 is a top perspective view of our improved tool holder shown in Figure 9;
FIGURE 12 is a bottom perspective view of our improved tool holder shown in Figure 9; and
FIGURE 13 is a cross-sectional view of our improved tool holder mounted onto the chuck of an EDM machine in accordance with a third embodiment of the present invention.

### Brief Description of the Present Invention

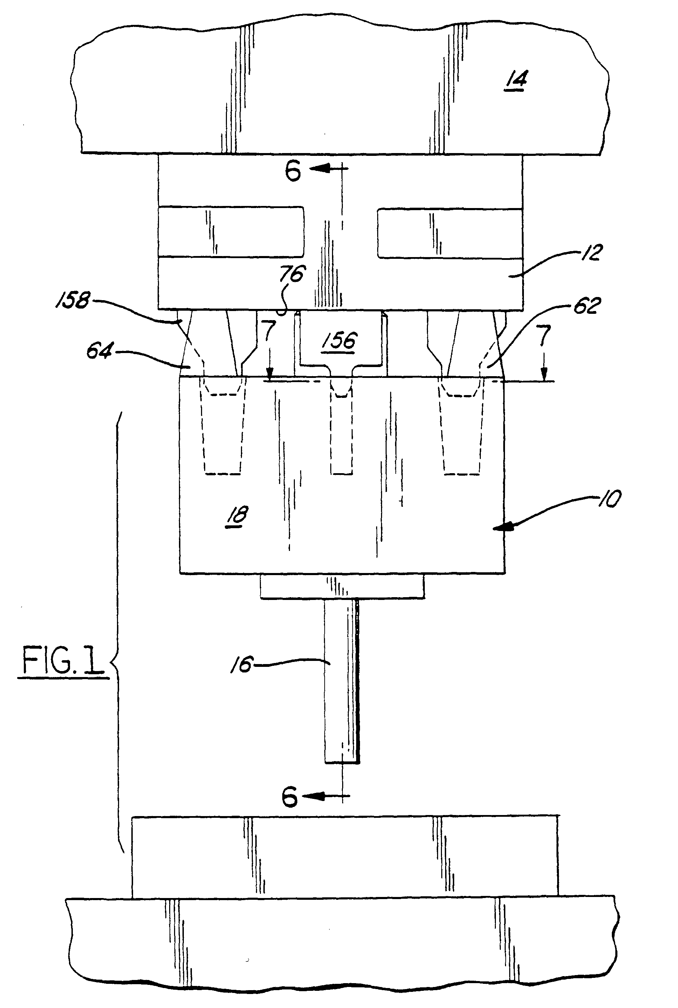

In Figure 1, we have shown somewhat schematically our improved tool holder 10 suspended from a coupling member or chuck 12 of an EDM machine 14. An EDM tool 16 is suspended from the holder. The tool may be locked in or mounted on the tool holder similar to the arrangement disclosed in U.S. Patent No. 4,621,821, or in any other suitable fashion.

Our tool holder 10 comprises a plastic body member 18 which preferably is formed by injection molding utilizing a tough durable plastic which is stable at the operating temperatures to be encountered in EDM operations, i.e. normally not exceeding 120° (250°F) to 150°C (300°F). A thermoplastic or thermosetting type resin may be used, though at present we have found a thermoplastic material sold by Phillips 66 under the trademark RYTON® to be preferred. This is a polyphenylene sulfide. The preferred grade is R-402XT.

General Electric makes a similar resin sold under the name SUPEC. In either case, the resin is glass fiber reinforced (30%) . These resins will hold their configuration and desirable properties up to about 233°C (450°F) which is sufficient for normal operating temperatures for the oil bath in which the EDM operations are carried out.

In this application we have referred to the tool holder body member 18 as having been injection molded. This is the preferred method of forming it. However, it can be formed by any plastics molding technique which encapsulates components of the tool holder. Thus, in using the term "injection molding' or "injection molded", we intend to indicate a plastic body member formed by molding which encapsulates components therein.

The tool holder 10 carrying the tool 16 may be removed from and replaced in the EDM machine 12 many times in the course of a production run in which tool 16 is used to create a precisely dimensioned cavity in a succession of workpieces. It is of prime importance that the tool 16 always be accurately re-positioned in the EDM machine after it has been removed. Accuracy within a range of plus or minus 0.01 millimeters is necessary and a very high repetitive position accuracy is expected. Such accuracy must be attained even though the tool holder is removed from and replaced in the EDM machine many times. In U.S. Patent Nos. 4,815,780 and 4,855,558 such accuracy is attained by having centering pins 47 (see the '780 patent) or rails 68 (the '558 patent) on the coupling member or chuck of the EDM machine enter respectively apertures in a spring steel centering disk 13 ('780 patent) or slots such as 32 in the tool holder ('558 patent). In the case of the centering pins and the spring steel centering disk of the '780 patent, the pins have conically tapered ends which enter apertures 52 in the plate. The plate deflects axially along the Z-axis (in the direction of the entering movement of the pins) to accommodate the pins. Similarly, rails of patent 4,855,558 enter the slots in the holder and cause the lips such as lip 38d in Figure 4, to deflect axially along the Z-axis as the rail enters. There are four such pins or rails arranged circumaxially on the chuck which enter correspondingly arranged apertures or slots on the tool holder and these serve to fix the tool holder on the chuck along the X and Y axes. Accurate positioning along the Z-axis is provided by having abutting flat surfaces on the chuck and tool holder.

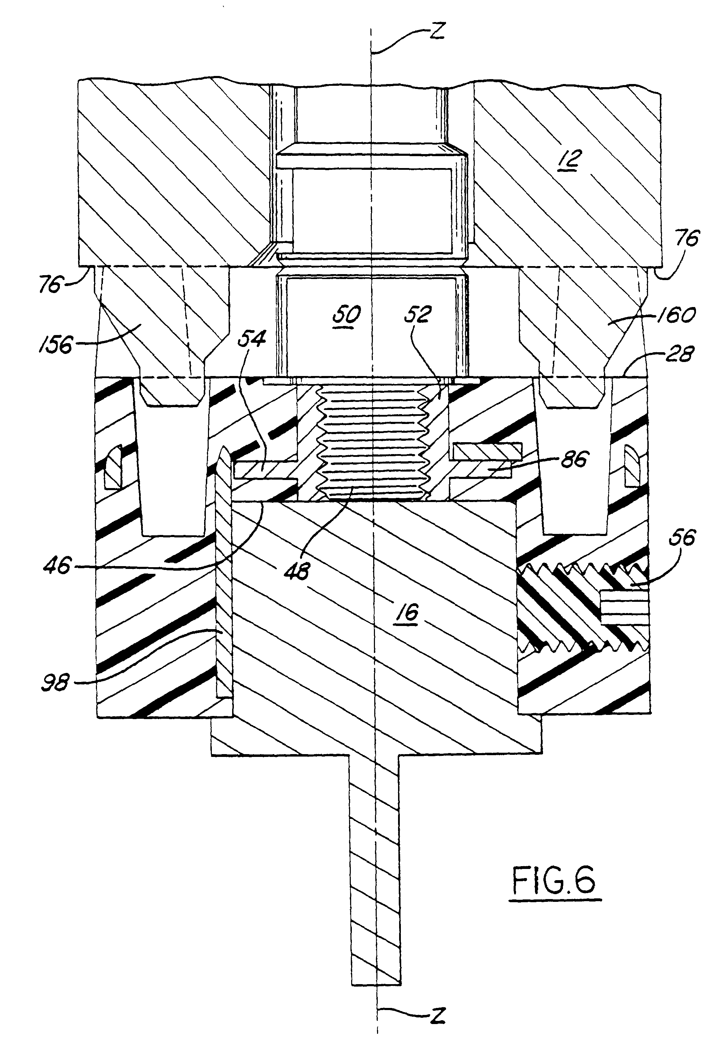

With the foregoing background, and turning again to our disclosure, the plastic body member 18 has four side faces 20, 22, 24 and 26, and opposite top and bottom flat parallel faces 28 and 30. The body member may be provided with open-ended voids as at 32, 34 to conserve the amount of resin required to form the body and to maximize the strength and stability of the block. The voids may also be arranged to provide a means for holding an EDM tool on the block in the form of a clamping chamber 36 opening through the bottom face 30 and having four walls 38, 40, 42 and 44 which are perpendicular to the bottom face 30. A bottom wall or face 46 of the chamber has a threaded locking-pin or draw-bar-receiving bore 48 for threaded mounting of a locking pin or draw bar 50 as shown in Figure 6. Such locking pin or draw bar is similar to that shown in U.S. Patent Nos. 4,815,780 and 4,855,558 and is well understood by those skilled in the art and need not be further described. The bore 48 is formed in a nut 52 having a lateral flange 54. The nut may be formed of metal, such as brass, and insert-molded in the body member at the time the latter is injection molded. The axis of the threaded bore 48 of the nut is perpendicular to the bottom wall or face 46 of the tool clamping chamber 36, and lies on the Z-axis of the holder 10.

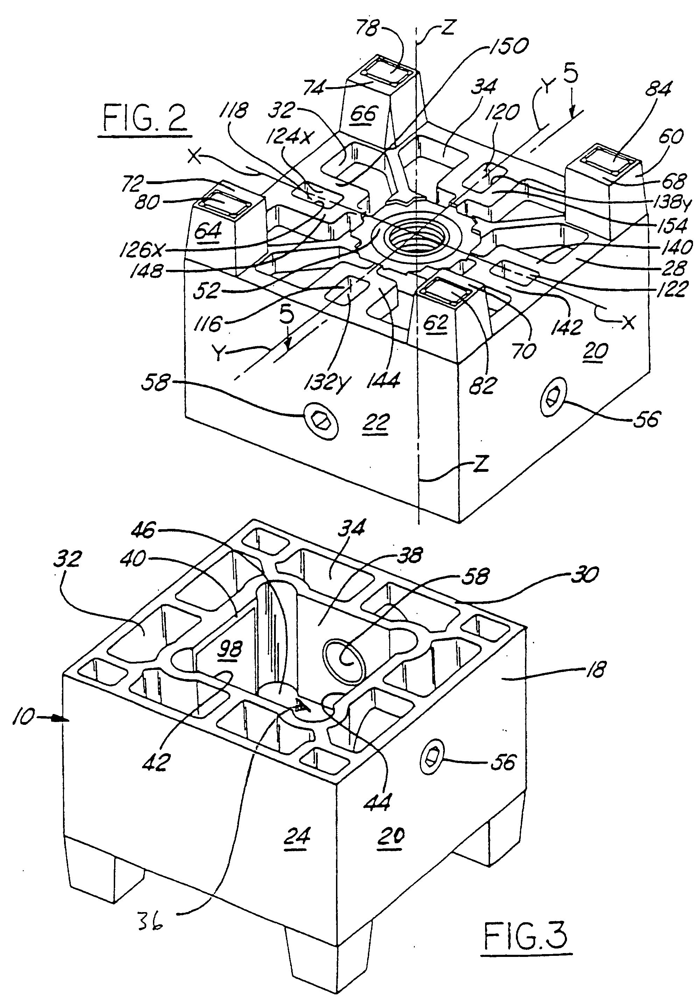

As shown in Figures 2, 3 and 6, set screws 56 and 58 are threaded into the body member and have wrench engaging exposed outer ends at faces 20 and 22 and project inwardly into the tool chamber through faces 38 and 44 to engage and hold the tool 16 in firm contact with faces 40, 42 and 46 of the clamping chamber in a fashion similar to that shown in U.S. Patent No. 4,621,821. The clamping chamber 36 and set screws 56 and 58 provide a means for mounting or locking the EDM electrode or tool on the body member.

Projecting upwardly at the four corners of the body member 18 are legs 60, 62, 64 and 66 which are integrally molded with the body member. At the upper end of each of these legs there is an end face reference surface 68, 70, 72 and 74 described in more detail hereafter. These end face reference surfaces lie in a common X-Y plane which is perpendicular to the Z-axis of the body member and parallel to the X-Y plane of the top face 28 of the body member. These end face reference surfaces are adapted to rest in firm contact against the underside face 76 of the coupling member or chuck by the pulling action of the locking pin or draw bar 50. The face 76 is planely ground such that it lies exactly parallel to the X-Y plane. The end face reference surfaces 68, 70, 72 and 74 thus determine the Z-distance or Z-position of the tool holder (and in turn an EDM tool carried by it) in relation to the chuck 12 and position the tool holder in an X-Y plane which is exactly parallel to the X-Y plane of the chuck 12 of the EDM machine (and perpendicular to the Z-axis of the chuck 12).

Embedded in the ends of legs 60, 62, 64 and 66 by insert molding and projecting slightly thereabove are end portions 78, 80, 82 and 84 of an electrical conductor element 86 best shown in Figures 2 and 4. Such exposed portions define the aforementioned end face reference surfaces 68, 70, 72 and 74. The conductor element is made of half-hard copper or other good electrical conductive material, and is inserted-molded in the body member. It may be formed of one piece of copper shaped as shown in Figure 4. In the embodiment shown, element 86 has a plate portion 88 of generally square shape with four upwardly bent legs or risers at the corners, as at 90, 92, 94 and 96. Each riser or leg extends at approximately 90° to the flat plate portion 88, and is itself bent at about 90° near its upper end to form the end portions 78, 80, 82 and 84. The ends 78, 80, 82 and 84 will lie in firm abutting contact with the planely ground surface 76 of the chuck when the tool holder is drawn thereagainst by the locking pin or draw bar 50. The plastic material of legs 60, 62, 64 and 66 underlies and marginally surrounds the end portions 78, 80, 82 and 84 to support such ends for contact with the surface 76. The conductor end portions project slightly above the plastic material at the ends of the legs to assure good electrical contact with the opposing face 76 of the chuck.

It is intended that the conductor portions 78, 80, 82 and 84 have exposed surfaces 68, 70, 72 and 74 that define the aforementioned x-y reference plane simply as a result of the insert molding of the conductor in the block. However, it will be understood that following the insert molding, if the surfaces 68, 70, 72 and 74 are not suitable, they may be dressed in a separate operation.

A central area 98 of the flat plate portion 88 is bent downwardly as best shown in Figures 4 and 6 and is embedded in but projects slightly above the face 40 of the tool receiving cavity 36 and forms a downwardly extending tab against which an EDM tool or electrode 16 will be urged in mating contact when the screw 56 is tightened against such tool clamping it against tab 98. The marginal edges 100, 102, 104 and 106 are bent downwardly as shown. Four through apertures 108, 110, 112 and 114 are formed in the flat plate portion 88 of the conductor element in alignment with four locating pockets 116, 118, 120 and 122. It will be noted in Figure 6 that flange 54 of the nut 52 may be in abutting and electrically conductive relationship with the conductor element.

Locating pockets, in combination with the reference end faces 68, 70, 72 and 74, determine the exact X-Y and Z-position of the tool holder (and in turn the EDM tool) in relation to the chuck 12. The pockets are formed in the plastic body member 18 to open upwardly through the top face 28. The pockets are arranged in pairs. One pair 118 and 122 lies on the X-axis of the holder, the other pair 116 and 120 lies on the Y-axis of the holder as shown in Figure 2. Each pocket has a pair of opposed slightly convex tapering positioning faces. The convexity of such faces is slightly exaggerated in the drawings to emphasize its presence. For pockets 118 and 122, these faces are designated 124x and 126x and 128x and 130x, respectively. Such faces are opposed to each other along the X-axis, but tapered toward each other along the Z-axis moving from top face 28 downwardly into the body member. Thus, it may be said of these pairs of faces 124x, 126x and 128x, 130x that they are generally parallel to the X-axis. In short, we may refer to them herein as opposed inwardly tapering X-axis faces.

Similarly, pockets 116 and 120 have opposed convex tapering positioning faces 132y, 134y and 136y, 138y which are generally parallel to each other along the Y-axis, but taper toward each other along the Z-axis moving from top face 28 downwardly into the body member. Thus, it may be said of these pairs of faces 132y, 134y and 136y, 138y that they are generally parallel to the Y-axis. In short, we may refer to them herein as opposed inwardly tapering Y-axis faces.

Faces 124x through 138y are the exposed surfaces of the slightly resilient walls of each pocket. Thus, for pocket 116 there are walls 144, 146; for pocket 118 there are walls 148, 150; for pocket 120 there are walls 152, 154; for pocket 122 there are walls 140, 142. These walls are formed by the voids 32 in the body member.

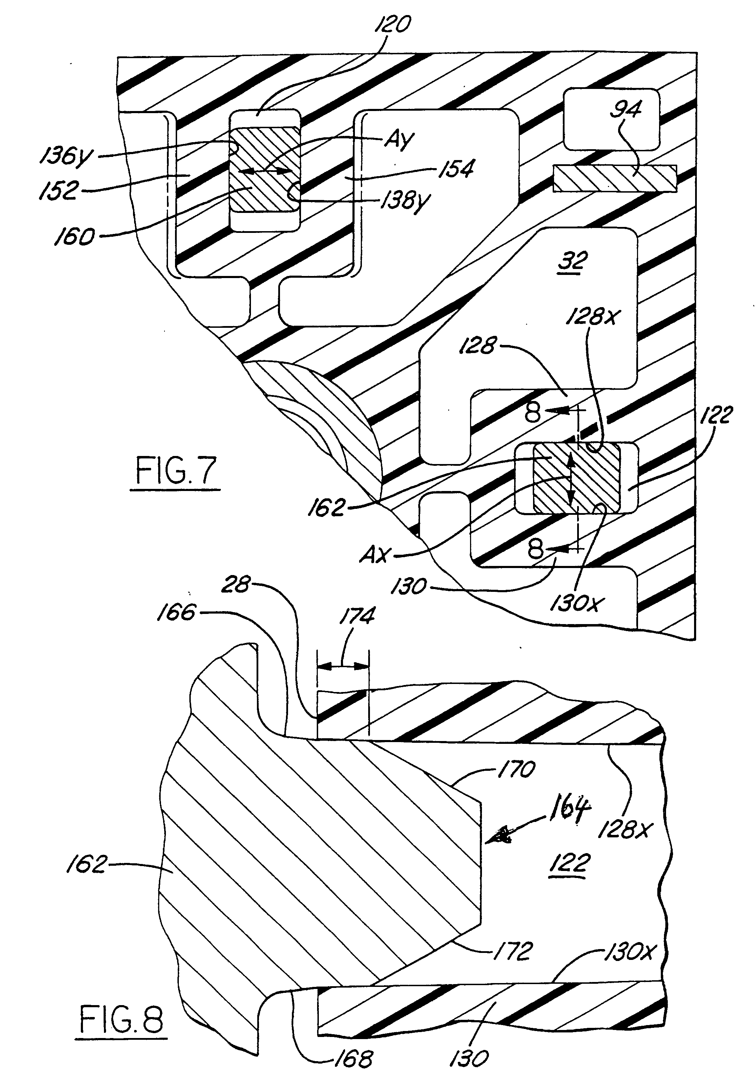

These opposed convex walls, because of the slightly resilient nature of the plastic from which the plastic body 18 is formed, will resistingly flex laterally in the direction of the arrows Aₓ and A_{y} shown in Figure 7. The flat sides of the pins will initially make a line contact with the convex walls of the pockets, but as the pins are pushed deeper into the pockets, the walls will flatten to match the sides of the pins and will appear flat in Figure 7. Thus, the opposed walls 136y, 138y, 128x and 130x, and the remaining corresponding walls of the pockets, will tightly grip the pins positioning the holder in the proper X-Y orientation. Such flexure occurs as the flat sided locating pins 156, 158, 160 and 162 of the tool chuck or coupling member 12 are pushed down into the pockets as the locking pin or draw bar pulls the tool holder and chuck together. It will be noted that the design makes use of the resilient character of the plastic of which the body member 18 is fabricated. Unlike the prior art where the flexure of the centering disk or the tool holder is along the Z-axis, in our design there is no flexure along the Z-axis, but only along the X and Y axes which are the directions in which the tool holder is to be accurately located.

To accomplish such locating, the pins 156-162 are generally similar to the rails 62-68 of U.S. Patent No. 4,855,558 or the centering pins 47 of U.S. Patent No. 4,815,780, namely they may be integrally formed with the chuck and project downwardly therefrom. As the nose portions are the same for each locating pin, a description of pin 162 suffices for all. The pin has a truncated nose portion 164 having opposed flat sides 166 and 168 which have a taper matching the taper of the confronting flexible walls 128x and 130x, and a lead-in portion with more sharply tapering sides 170 and 172, all as best shown in Figure 8.

The opposed X and Y walls (130x, 128x or 136y, 138y) of the pockets have locating surfaces extending inwardly from the top face 28. We have found that such surfaces may be approximately 1,6mm [0.063 inches] in axial length as indicated at 174 in Figure 8. As the locating pin enters the pocket, once contact has been made between the flat faces 166 and 168 and the opposed convex walls 128x and 130x of the tool holder, the wall portions 128 and 130 will begin to resistingly flex apart, as indicated by the arrows A_{X} or A_{Y} exactly locating the tool holder when the reference surface faces 68-74 bottom out at the under side face 76 of the coupling member or chuck 12.

In this disclosure, the chuck or coupling member 12 is electrified or part of an electric circuit which supplies the electric current for the machining to be carried out by the tool 16. Thus when the end reference faces 68-74 are brought into firm contact with the underface 76 of the coupling member, the copper conductor portions 78-84 not only accurately position the tool holder along the Z-axis, but also are in electrically conductive relation with the chuck whereby electric current is supplied to the tool 16. Current is also optionally supplied through the locking pin or drawbar 50.

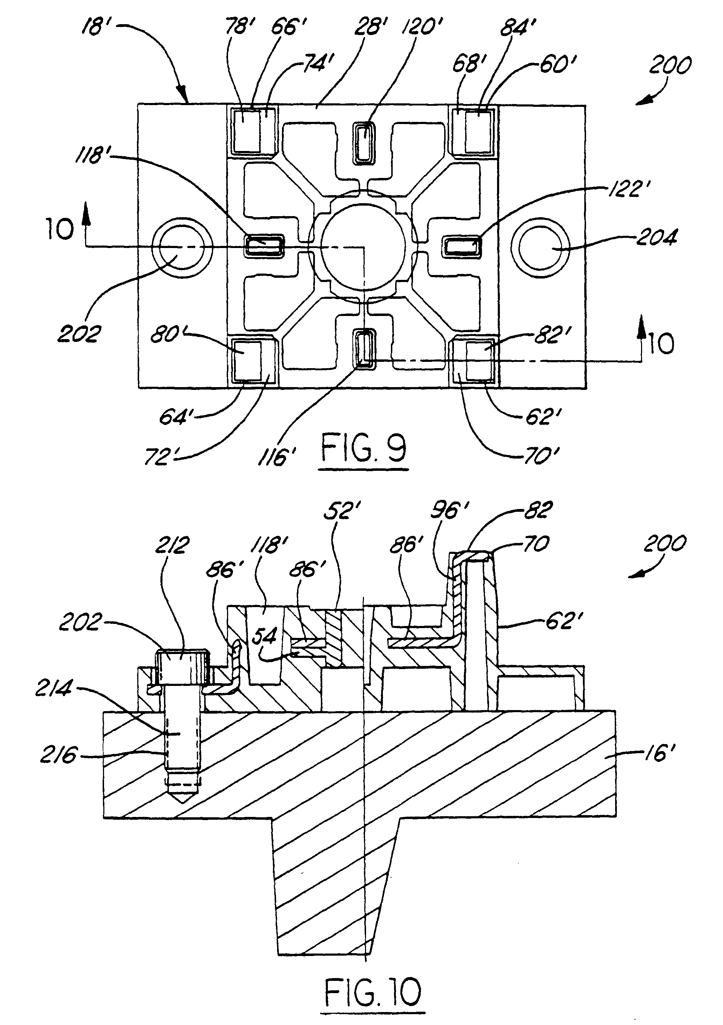

In Figures 9-12 we have shown our improved tool holder 200 in accordance with an alternative embodiment of the present invention. Tool holder 200 is generally similar to tool holder 10 and primed reference numerals are used to indicate generally corresponding components. Tool holder 200, like tool holder 10, comprises a plastic body member 18' preferably formed by injection molding utilizing a tough durable plastic.

Tool holder 200 generally differs from tool holder 10 in using electrically conductive bolts 202 and 204 directly attached to a tool 16' through respective apertures 208 and 210 in body member 18' instead of the clamping chamber and set screw combination used by tool holder 10. As best shown in Figure 10, head 212 of bolt 202 is fastened down on conductor element 86' to make an electrical connection. Elongate body portion 214 of bolt 202 penetrates into receiving bore 216 of tool 206 to clamp the tool to tool holder 200 and electrically connect the tool to conductor element 86'. Thus, bolts 202 and 204 provide means for mounting a tool to body member 18' and exposed electric conductor means for electric contact with the tool mounted on the body member.

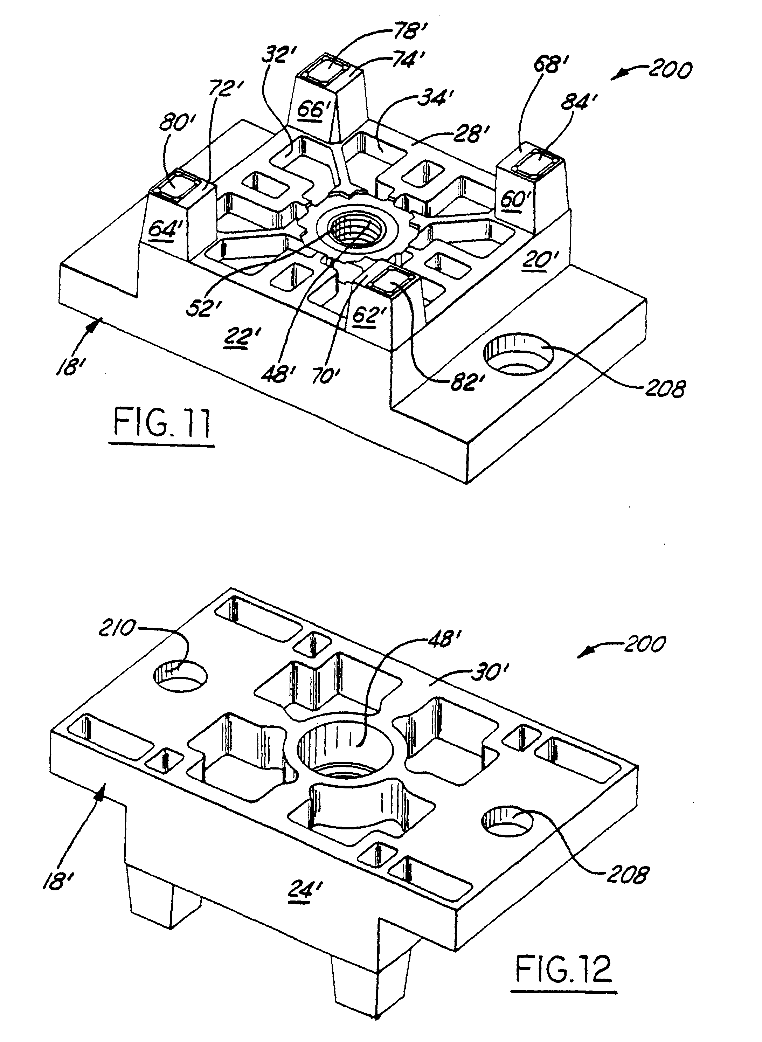

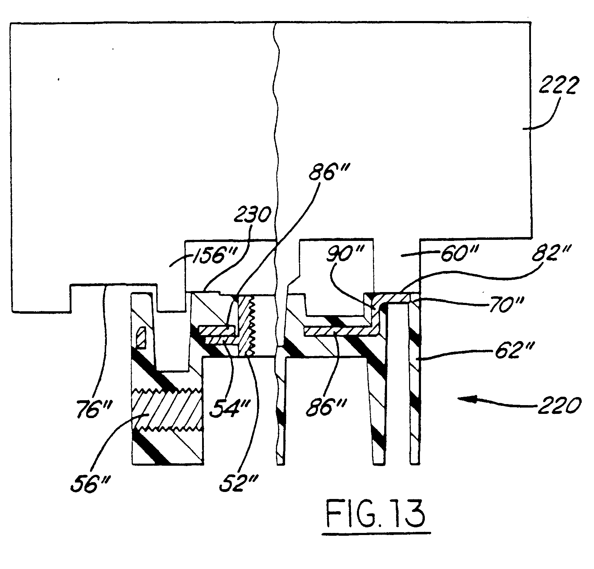

In Figure 13 we have shown another alternative embodiment of the present invention in which our improved tool holder 220 is operable with an EDM machine chuck 222 having four downwardly projecting legs arranged in a pattern similar to the legs of the tool holder 200, i.e., 60', 62', 64' and 66', are Figure 11. Chuck 222 is, of course, electrically conductive. Tool holder 220 generally differs from tool holder 10 and 200 in that it has no upwardly projecting legs but rather a generally flat upper surface 230 and is for use with a chuck having the aforesaid four downwardly projecting legs such as the leg 62". Tool holder 220 has locating reference faces, one of which is shown 70". These reference faces are similar to the surfaces co the surfaces 68', 70', 72' and 74' shown in Figure 9 but are not locating on the ends of legs but rather in the generally flat upper surface 230. Such reference surfaces lie in a common X-Y plane and are adapted to abut in firm contact the lower ends of legs 60", 62", 64" and 66" which project downwardly from the chuck 222. The legs and reference surfaces are pulled together and held in such abutting contact by the pulling action of the aforementioned draw bar. The reference surfaces 70", etc., and the downwardly projecting legs 60", etc., thus determine the Z-distance in relation to chuck 222 and position the tool holder in an X-Y plane which is exactly parallel to the X-Y plane of the chuck 222 of the EDM machine.

Embedded in the end face reference surfaces 70" by insert molding and projecting slightly thereabove are conductor end portions such as end portion 82 of electrical conductor element 86". Other conductor end portions corresponding to 78', 80', and 84' are, of course, also present. Such conductor end portions project slightly above the plastic material of the end face reference surfaces to assure good electrical contact with the legs of chuck 222.

Thus, we have provided a tool holder for an EDM machine that may be fabricated very inexpensively and which at the same time avoids the prior art problem of losing its accuracy if it is bumped and will serve to hold the EDM tool for accurate repeated positioning in the EDM machine.

## Claims

1. A tool holder (10) for electric discharge machining (EDM) having a block (18) having means (36, 56, 58) for mounting an EDM tool (16) thereon and having locating reference faces (68, 70, 72, 74) adapted to abut a mounting face (76) on an EDM machine (14) and thereby locate the block in a Z-direction on the EDM machine (14),**characterized by**:
the block having a plurality of outwardly opening pockets (116, 118, 120, 122) defined by opposed spaced apart pairs of walls (140, 142; 144, 146; 148, 152; 152, 154) which are inflexible in the Z-direction but resistingly flexible in x or y directions, and between which walls locating pins (156, 158, 160, 162) on the EDM machine are inserted to position the holder in an x-y plane.

2. The tool holder of claim 1 wherein said pockets (116, 118, 120 and 122) are arranged in pairs with one pair (118, 122) lying on the x-axis of the tool holder and the other pair (116, 120) lying on the y-axis of the holder.

3. The tool holder of claim 2 wherein each pocket (116, 118, 120, 122) has a pair of opposed slightly convex tapering positioning faces (124x, 126x; 128x, 130x; 132y, 134y; 136y, 138y).

4. The tool holder of claim 3 wherein said convex tapering positioning faces (124x, 126x, 128x, 130x and 132y, 134y, 136y, 13y) taper toward each other from the top face (28) downwardly, to provide opposed inward tapering x-axis faces.

5. The tool holder of claim 1 further comprising the block having portions (78, 80, 82, 84) (a) at said faces for electric contact with a mounting face (76) on an EDM machine (14) and (b) electric contact with a tool (16) mounted on the block (18), whereby an electric circuit is completed between the tool (16) and an EDM machine (14) on which the holder (10) is mounted; and
wherein said portions for electric contact with a tool mounted on the block include means (56, 58, 96) for mounting an EDM tool (16) on the block (18).

6. The tool holder of claim 5 wherein the portions at said faces for electric contact with a mounting face on an EDM machine constitute said locating reference faces.

7. The tool holder of claim 1 wherein said block is shaped to provide a plurality of legs (60, 62, 64, 66) projecting away from the block, and said locating reference faces are provided at outer ends of the legs.

8. The tool holder of claim 1 wherein said locating reference faces are adapted to abut legs (60", 62", 64", 66") on a mounting face on an EDM machine.

9. The tool holder of claim 1 wherein the block is electrically conductive and the resistingly flexible walls are plastic.

10. The tool holder defined by claim 1 wherein the block (18) is molded plastic, said reference faces (68, 70, 72, 74) being integrally molded with the block, and the block comprises copper portions (78, 80, 82, 84) at said reference faces for completing the electric circuit.

11. The tool holder defined by claim 10 wherein said molded plastic is electrically non-conductive.

12. The tool holder defined by claim 10 wherein the block (18) includes a plate-like (86) structure having a plurality of upwardly extending risers (90, 92, 94, 96) whose upper free ends are bent laterally to form portions exposed at and constituting said reference faces.

13. The tool holder defined by claim 12 wherein said plate-like structure has a central portion (98) exposed for electrical contact with an EDM tool (16) mounted on the block; and
said central portion and said upwardly extending risers (90, 92, 94, 96) being encased in said block of molded plastic.

14. The tool holder defined by claim 13 wherein said portions constituting said reference faces (68, 70, 72, 74) are marginally surrounded by the molded plastic block (18) and the block underlies such portions supporting the same for contact with the positioning face (76) of an EDM machine on which the tool holder is to be mounted.

15. A method of making a tool holder (10) for an electric discharge machining (EDM) machine (14) including injection molding a block (18) in a die cavity shaped to provide the block with means(36, 56, 58) for mounting an EDM tool (16) on one side of the block and locating reference faces (68, 70, 72, 74) on the other side of the block adapted to abut a mounting face (76) on an EDM machine (14) and thereby locate the block in a Z-direction on the EDM machine **characterized by**:
injection molding in said block (18) a plurality of outwardly opening pockets (116, 118, 120, 122) defined by spaced apart walls (140, 142, 144, 146, 148, 150, 152, 154) resistingly flexible in x or y directions but inflexible in the z-direction, and between which walls locating pins (156, 158, 160, 162) on the EDM machine are inserted to position the holder in an x-y plane.

16. The method of claim 15 further comprising insert molding in said block at the time of its molding, an electric contact having portions (a) exposed at said faces for electric contact with a mounting face on an EDM machine and (b)exposed for electric contact with a tool mounted on the block and forming the portion of the conductor exposed at said faces to lie flush.

17. The method of claim 16 wherein the block is electrically conductive and the positioning pockets are plastic.

18. The method of claim 16 wherein said means for mounting an EDM tool comprises an outwardly opening tool clamping cavity in the block.

19. The method of claim 18 wherein said means for mounting an EDM tool comprises an aperture in the block adapted to receive a bolt.

20. The method of claim 19 wherein said portions for electric contact with a tool mounted on the block include said means for mounting an EDM tool on the block.

21. The method of claim 15 wherein injection molding provides the block with a plurality of legs (60, 62, 64, 66) projecting away from the block, wherein said locating reference faces are provided at outer ends of the legs.

22. The method of claim 15 wherein said locating reference faces are adapted to abut legs (60", 62", 64", 66") on the mounting face on an EDM machine.

23. The method of claim 15 wherein during molding of the block forming voids in the block arranged to define said resistingly flexible walls.

24. The method of claim 23 wherein forming said opposed spaced apart walls with a convex shape.

25. The method of claim 15 further comprising the block being plastic and having a plurality of legs (60, 62, 64, 66) projecting away from the block, wherein said locating reference faces are provided at outer ends of the legs.

26. The method of claim 25 further comprising an electric conductor (86) with risers to extend up the legs, with ends of the risers shaped to provide end portions to overlie the free ends of said legs; and
insert molding said electric conductor (86) in said plastic block at the time of injection molding the block with said end portions of the risers supported by the legs of the block and positioning such end portions to define an X-Y reference plane.

27. The method of claim 26 wherein the step of providing the block with means for clamping an EDM tool comprises forming an outwardly opening tool clamping cavity (36) in the block.

28. The method of claim 27 wherein during forming of the electric conductor, a portion is formed therefrom to electrically contact an EDM tool subsequently mounted on the block.

29. The method of claim 28 wherein said portion formed to contact an EDM tool is positioned in an outwardly opening tool clamping cavity in the block to contact an EDM tool received in such cavity for mounting the tool on the block.

30. The method of claim 25 wherein during the injection molding of the block forming voids therein defined by resilient walls arranged to provide said outwardly opening positioning pockets.

## Patentansprüche

1. Werkzeughalter (10) für Funkenerosionsbearbeitung mit einem Block (18), der Elemente (36, 56, 58) für die Montage eines Werkzeugs (16) zur Funkenerosionsbearbeitung an demselben und führende Bezugsflächen (68, 70, 72, 74) besitzt, die dafür eingerichtet sind, an einer Montagefläche (76) einer Funkenerosionsbearbeitungsmaschine (14) anzuliegen und dadurch den Block in einer Z-Richtung an der Funkenerosionsbearbeitungsmaschine (14) festzulegen, **dadurch gekennzeichnet, dass** der Block eine Mehrzahl von nach außen öffnenden Taschen (116, 118, 120, 122) besitzt, die durch einander gegenüberliegend beabstandete Wandpaare (140, 142; 144, 146; 148, 150; 152, 154) definiert sind, welche unflexibel in der Z-Richtung aber resistent flexibel in den X- oder Y-Richtungen sind, wobei an der Funkenerosionsbearbeitungsmaschine befindliche Führungsstifte (156, 158, 160, 162) zwischen die Wände eingesetzt werden, um den Halter in einer X-Y-Ebene zu positionieren.

2. Werkzeughalter nach Anspruch 1, bei welchem die Taschen (116, 118, 120 und 122) in Paaren angeordnet sind, wobei ein Paar (118, 122) auf der X-Achse des Werkzeughalters und das andere Paar (116, 120) auf der Y-Achse des Halters liegt.

3. Werkzeughalter nach Anspruch 2, bei welchem jede Tasche (116, 118, 120, 122) ein Paar einander gegenüberliegender und leicht konvex abgeschrägter Positionierflächen (124x, 126x; 128x, 130x; 132y, 134y; 136y, 138y) besitzt.

4. Werkzeughalter nach Anspruch 3, bei welchem die konvex abgeschrägten Positionierflächen (124x, 126x; 128x, 130x; 132y, 134y; 136y, 138y) von der Stirnfläche (28) nach unten aufeinander zu abgeschrägt sind, um einander gegenüberliegende, nach innen abgeschrägte X-Achsenflächen zur Verfügung zu stellen.

5. Werkzeughalter nach Anspruch 1, bei welchem der Block ferner Bereiche (78, 80, 82, 84) (a) an den genannten Flächen für einen elektrischen Kontakt mit einer Montagefläche (76) an der Funkenerosionsbearbeitungsmaschine (14) und (b) für elektrischen Kontakt mit einem am Block (18) angebrachten Werkzeug (16) aufweist, wobei zwischen dem Werkzeug (16) und einer Funkenerosionsbearbeitungsmaschine (14), an der der Halter (10) angebracht ist, ein elektrischer Kreis geschlossen wird, und bei welchem die Bereiche für den elektrischen Kontakt mit einem an den Block angebrachten Werkzeug Elemente (56, 58, 96) für die Anbringung eines Funkenerosionsbearbeitungswerkzeuges (16) an dem Block (18) umfassen.

6. Werkzeughalter nach Anspruch 5, bei welchem die Bereiche an den Flächen für elektrischen Kontakt mit einer Montagefläche an einer Funkenerosionsbearbeitungsmaschine die führenden Bezugsflächen bilden.

7. Werkzeughalter nach Anspruch 1, bei welchem der Block derart geformt ist, dass er eine Mehrzahl von Füßen, (60, 62, 64, 66) bildet, die sich von dem Block weg erstrecken, und bei welchem die Führungsbezugsflächen an äußeren Enden der Füße vorgesehen sind.

8. Werkzeughalter nach Anspruch 1, bei welchem die führenden Bezugsflächen dafür eingerichtet sind, an Füßen (60'', 62'', 64'', 66") an einer Montagefläche an einer Funkenerosionsbearbeitungsmaschine anzuliegen.

9. Werkzeughalter nach Anspruch 1, bei welchem der Block elektrisch leitend ist und die resistent flexiblen Wände aus Kunststoff sind.

10. Werkzeughalter nach Anspruch 1, bei welchem der Block (18) aus gegossenem Kunststoff besteht und die Bezugsflächen (68, 70, 72, 74) mit dem Block in einem Stück gegossen sind, und wobei der Block zur Vervollständigung des elektrischen Kreises an den Bezugsflächen Kupferabschnitte (78, 80, 82, 84) aufweist.

11. Werkzeughalter nach Anspruch 10, bei welchem der gegossene Kunststoff elektrisch nichtleitend ist.

12. Werkzeughalter nach Anspruch 10, bei welchem der Block (18) einen plattenartigen (86) Aufbau mit einer Mehrzahl sich nach oben erstreckender Ansätze (90, 92, 94, 96) aufweist, deren obere freien Enden seitlich gebogen sind, um Abschnitte zu bilden, welche an den Bezugsflächen exponiert sind und diese darstellen.

13. Werkzeughalter nach Anspruch 12, bei welchem die plattenartige Struktur einen Mittelabschnitt (98) besitzt, der für elektrischen Kontakt mit einem auf dem Block montierten Funkenerosionsbearbeitungswerkzeug (16) exponiert ist, und wobei der Mittelbereich und die sich nach oben erstreckenden Ansätze (90, 92, 94, 96) in dem Block aus gegossenem Kunststoff eingekapselt sind.

14. Werkzeughalter nach Anspruch 13, bei welchem die die Bezugsflächen (68, 70, 72, 74) bildenden Abschnitte längs ihres Randes von dem gegossenen Kunststoffblock (18) umgeben sind, und bei dem der Block unter denjenigen Abschnitten liegt, die denselben zwecks Kontakts mit der Positionierfläche (76) einer Funkenerosionsbearbeitungsmaschine haltern, an welcher der Werkzeughalter anzubringen ist.

15. Verfahren zur Herstellung eines Werkzeughalters (10) für eine Maschine (14) zur Funkenerosionsbearbeitung, bei welchem ein Block (18) in der Höhlung eines Gesenks bzw. einer Form spritzgegossen wird, die derart geformt ist, dass sie den Block mit Elementen (36, 56, 58) für die Montage eines Funkenerosionsbearbeitungswerkzeugs (16) an einer Seite des Blocks, sowie führenden Bezugsflächen (68, 70, 72, 74) an der anderen Seite des Blocks versieht, die dazu eingerichtet sind, gegen eine Montagefläche (76) an einer Funkenerosionsbearbeitungsmaschine (14) zu stoßen und dabei den Block in Z-Richtung an der Funkenerosionsbearbeitungsmaschine örtlich festzulegen, **gekennzeichnet durch**
Spritzgussbildung einer Mehrzahl von sich nach außen öffnenden Taschen (116, 118, 20, 122) in dem Block (18), die **durch** voneinander beabstandete Wände (140, 142, 144, 146, 148, 150, 152, 154) definiert sind, die resistent flexibel in X- oder Y-Richtung, jedoch unflexibel in der Z-Richtung sind, und wobei zwischen diese Wände Positionierstifte (156, 158, 160, 162) an der Funkenerosionsbearbeitungsmaschine eingesetzt werden, um den Halter in einer X-Y-Ebene zu positionieren.

16. Verfahren nach Anspruch 15, wonach zum Zeitpunkt des Spritzgießens ein elektrischer Kontakt mit Abschnitten eingegossen wird, die (a) an den genannten Flächen für einen elektrischen Kontakt mit einer Montagefläche an einer Funkenerosionsmaschine, sowie (b) für den elektrischen Kontakt mit einem an dem Block angebrachten Werkzeug exponiert sind, und der den Abschnitt des Leiters bildet, der an den Flächen derart exponiert ist, dass er in gleicher Ebene liegt.

17. Verfahren nach Anspruch 16, bei welchem der Block elektrisch leitend ist und die Positioniertaschen aus Kunststoff bestehen.

18. Verfahren nach Anspruch 16, bei welchem das Element zur Montage eines Funkenerosionsbearbeitungswerkzeuges aus einer nach außen öffnenden Werkzeugklemmtasche in dem Block besteht.

19. Verfahren nach Anspruch 18, bei welchem das Element zur Montage eines Funkenerosionsbearbeitungswerkzeugs aus einer Öffnung in den Block besteht, die zur Aufnahme eines Bolzens eingerichtet ist.

20. Verfahren nach Anspruch 19, bei welchem die Abschnitte für den elektrischen Kontakt mit einem an den Block angebrachten Werkzeug das genannte Element zur Anbringung eines Funkenerosionsbearbeitungswerkzeugs an dem Block einschließen.

21. Verfahren nach Anspruch 15, bei welchem das Spritzgießen den Block mit einer Mehrzahl von Füßen (60, 62, 64, 66) versieht, die sich von dem Block weg erstrecken, wobei an den äußeren Enden der Füße die Bezugsflächen angeordnet sind.

22. Verfahren nach Anspruch 15, bei welchem die örtlich festlegenden Bezugsflächen dafür eingerichtet sind, gegen Füße (60'', 62'', 64'', 66'') an der Montagefläche einer Funkenerosionsbearbeitungsmaschine anzuliegen.

23. Verfahren nach Anspruch 15, bei welchem während des Gießens des Blocks Ausnehmungen in dem Block gebildet werden, die derart angeordnet sind, dass sie die resistent flexiblen Wände definieren.

24. Verfahren nach Anspruch 23, bei welchem die einander gegenüber liegend beabstandeten Wände mit konvexer Form ausgebildet wird.

25. Verfahren nach Anspruch 15, bei welchem der Block aus Kunststoff besteht und eine Mehrzahl von Füßen (60, 62, 64, 66) aufweist, die sich von dem Block weg erstrecken, wobei die führenden Bezugsflächen an äußeren Enden der Füße vorgesehen sind.

26. Verfahren nach Anspruch 25 mit einem elektrischen Leiter (86), welcher sich von den Füßen nach oben erstreckende Ansätze aufweist, wobei die Enden der Ansätze derart geformt sind, dass sie Endabschnitte bilden, welche die freien Enden der Füße überdecken, und wobei zum Zeitpunkt des Spritzgießens des Blocks der elektrische Leiter (86) in den Kunststoffblock eingegossen wird, derart, dass die Endabschnitte der Ansätze von den Füßen des Blocks gestützt und diese Endabschnitte derart positioniert werden, dass sie eine X-Y-Bezugsebene definieren.

27. Verfahren nach Anspruch 26, bei welcher der Schritt des Ausrüstens des Blocks mit einem Element zum Festklemmen eines Funkenerosionsbearbeitungswerkzeugs aus der Bildung einer sich nach außen öffnenden Höhlung (36) in den Block zwecks Festklemmens des Werkzeugs besteht.

28. Verfahren nach Anspruch 27, bei welchem während der Formung des elektrischen Leiters ein Abschnitt desselben derart ausgebildet wird, dass er ein Funkenerosionsbearbeitungswerkzeug elektrisch kontaktiert, das nachfolgend an dem Block angebracht wird.

29. Verfahren nach Anspruch 28, bei welchem der Abschnitt, der zur Kontaktierung eines Funkenerosionsbearbeitungswerkzeugs ausgebildet wird, in einer nach außen öffnenden Werkzeugklemmtasche in dem Block positioniert wird, um ein Funkenerosionsbearbeitungswerkzeug zu kontaktieren, das in dieser Tasche aufgenommen wird, um das Werkzeug an dem Block anzubringen.

30. Verfahren nach Anspruch 25, bei welchem während des Spritzgießens des Blocks Ausnehmungen darin ausgebildet werden, die durch elastische Wände definiert sind, die derart angeordnet sind, dass sie die genannten nach außen öffnenden Positioniertaschen bilden.

## Revendications

1. Porte-outil (10) pour usinage par électro-érosion (EDM) comprenant un bloc (18) comportant des moyens (36, 56, 58) pour monter un outil d'usinage par électro-érosion (16) et présentant des faces de référence (68, 70, 72, 74) prévues pour être en butée avec une face de montage (76) sur une machine d'usinage par électro-érosion (14) et positionnant ainsi le bloc dans une direction z sur la machine d'usinage par électro-érosion (14),
**caractérisé en ce que**
le bloc comporte une pluralité de poches ouvertes vers l'extérieur (116, 118, 120, 122) déterminées par des paires de parois opposées séparées (140, 142 ; 144, 146 ; 148, 152; 152, 154) qui sont inflexibles dans la direction z et flexibles avec résistance dans les directions x et y, et entre lesquelles des pions de positionnement (156, 158 ; 160, 162) sur la machine d'usinage par électro-érosion sont introduits pour positionner le porte-outil dans un plan x-y.

2. Porte-outil selon la revendication 1, dans lequel les dites poches (116, 118, 120 et 122) sont arrangées par paires, une paire (118, 122) étant dans l'axe x du porte-outil et l'autre paire (116, 120) étant dans l'axe y du porte-outil.

3. Porte-outil selon la revendication 2, dans lequel chaque poche (116, 118, 120, 122) présente deux faces opposées coniques légèrement convexes de positionnement (124x, 126x ; 128x, 130x ; 132y, 134y ; 136y, 138y).

4. Porte-outil selon la revendication 3, dans lequel les dites faces opposées coniques légèrement convexes de positionnement (124x, 126x, 128x, 130x et 132y, 134y, 136y, 138y) décroissent les unes vers les autres à partir du sommet (28) vers le bas, pour déterminer des faces opposées inclinées vers l'intérieur dans l'axe x.

5. Porte-outil selon la revendication 1, comprenant, en outre, le bloc ayant des parties (78, 80, 82, 84) (a) aux dites faces pour un contact électrique avec une face de montage (76) sur une machine d'usinage par électro-érosion (14) et (b) un contact électrique avec un outil (16) monté sur le bloc (18), de manière qu'un circuit électrique soit fermé entre l'outil (16) et la machine d'usinage par électro-érosion (14) sur laquelle le porte-outil (10) est monté ; et
dans lequel les dites parties pour un contact électrique avec un outil monté sur le bloc incluent des moyens (56, 58, 96) pour monter un outil d'usinage par électro-érosion (16) sur le bloc (18).

6. Porte-outil selon la revendication 5, dans lequel les zones aux dites faces pour un contact électrique avec une face de montage sur une machine d'usinage par électro-érosion constituent les dites faces de référence de positionnement.

7. Porte-outil selon la revendication 1, dans lequel le dit bloc présente une forme déterminant une pluralité de jambes (60, 62, 64, 66) faisant saillie du bloc, et les dites faces de référence de positionnement sont pourvues de jambes aux extrémités extérieures.

8. Porte-outil selon la revendication 1, dans lequel les dites faces de référence de positionnement sont adaptées pour être en butée avec les jambes (60", 62", 64", 66") sur une face de montage d'une machine d'usinage par électro-érosion.

9. Porte-outil selon la revendication 1, dans lequel le bloc est électriquement conducteur et les parois flexibles avec résistance sont en plastique.

10. Porte-outil selon la revendication 1, dans lequel le bloc (18) est en plastique moulé, les dites faces de référence (68, 70, 72, 74) étant intégralement moulées avec le bloc, et le bloc comporte des parties de cuivre (78, 80, 82, 84) aux dites faces de référence pour achever le circuit électrique.

11. Porte-outil selon la revendication 10, dans lequel le dit plastique moulé est électriquement non-conducteur.

12. Porte-outil selon la revendication 10, dans lequel le bloc (18) comporte une structure en forme de plateau (86) ayant une pluralité de gorges s'étendant vers le haut (90, 92, 94, 96) dont les extrémités supérieures libres sont courbées latéralement pour former des zones exposées aux dites faces de référence et constituant celles-ci.

13. Porte-outil selon la revendication 12, dans lequel la dite structure en forme de plateau présente une partie centrale (98) exposée pour un contact électrique avec un outil d'usinage par électro-érosion (16) monté sur le bloc ;
la dite partie centrale et les dites gorges s'étendant vers le haut (90, 92, 94, 96) étant encastrées dans le dit bloc de plastique moulé.

14. Porte-outil selon la revendication 13, dans lequel les dites zones constituant les dites faces de référence (68, 70, 72, 74) sont entourées de façon marginale par le bloc de plastique moulé (18) et le bloc est au-dessous de telles zones portant celui-ci pour un contact avec la face de positionnement (76) d'une machine d'usinage par électro-érosion sur laquelle le porte-outil doit être monté.

15. Procédé de fabrication d'un porte-outil (10) pour une machine d'usinage par électro-érosion (EDM) (14) incluant un bloc (18) moulé par injection dans une matrice formée pour déterminer le bloc avec des moyens (36, 56, 58) pour monter un outil d'usinage par électro-érosion (16) sur un côté du bloc et des faces de référence de positionnement (68, 70, 72, 74) sur le côté opposé du bloc adaptées pour être en butée avec une face de montage (76) sur une machine d'usinage par électro-érosion (14) et positionner ainsi le bloc dans une direction z sur la machine d'usinage par électro-érosion,
**caractérisé par**
le moulage par injection dans le dit bloc (18) d'une pluralité de poches s'ouvrant vers l'extérieur (116, 118, 120, 122) déterminées par des parois séparées (140, 142, 144, 145, 148, 150, 152, 154) flexibles à résistance dans des directions x et y, mais inflexibles dans la direction z, et entre lesquelles parois sont introduits des pions de positionnement (156, 158, 160, 162) sur la machine d'usinage par électro-érosion pour positionner le porte-outil dans un plan x-y.

16. Procédé selon la revendication 15, comprenant, en outre, un insert moulé dans le dit bloc au moment de son moulage, un contact électrique ayant des zones (a) exposées aux dites faces pour un contact électrique avec une face de montage sur une machine d'usinage par électro-érosion et (b) exposées pour un contact électrique avec un outil monté sur le bloc et formant la zone du conducteur exposée aux dites faces pour reposer au niveau.

17. Procédé selon la revendication 16, dans lequel le bloc est électriquement conducteur et les poches de positionnement sont en plastique.

18. Procédé selon la revendication 16, dans lequel les dits moyens de montage d'un outil d'usinage par éleccro-érosion comporte une cavité de blocage d'un outil ouverte vers l'extérieur dans le bloc.

19. Procédé selon la revendication 18, dans lequel les dits moyens de montage d'un outil d'usinage par électro-érosion présente une ouverture dans le bloc pour recevoir un écrou.

20. Procédé selon la revendication 19, dans lequel les dites zones pour un contact électrique avec un outil monté sur le bloc comportent les dits moyens de montage d'un outil d'usinage par électro-érosion sur le bloc.

21. Procédé selon la revendication 15, dans lequel le moulage par injection donne au bloc une pluralité de jambes (60, 62, 64, 66) faisant saillie du bloc, et dans lequel les dites faces de référence de positionnement sont prévues aux extrémités extérieures des jambes.

22. Procédé selon la revendication 15, dans lequel les dites faces de référence de positionnement sont prévues pour être en butée des jambes (60", 62", 64", 66") sur la face de montage sur une machine d'usinage par électro-érosion.

23. Procédé selon la revendication 15, dans lequel, lors du moulage du bloc, on forme des vides dans le bloc pour déterminer des parois flexibles à résistance.

24. Procédé selon la revendication 23, dans lequel les dites parois opposées séparées affectent une forme convexe.

25. Procédé selon la revendication 15, dans lequel le bloc est en plastique et présente une pluralité de jambes (60, 62, 64, 66) faisant saillie hors du bloc, et dans lequel les dites faces de référence de positionnement sont prévues aux extrémités extérieures des jambes.

26. Procédé selon la revendication 25, comprenant, en outre, un conducteur électrique (86) avec des gorges s'étendant au-delà des jambes, les extrémités des gorges étant mises en forme pour déterminer des zones d'extrémité pour couvrir les extrémités libres des dites jambes ; et
l'insertion par moulage du dit conducteur électrique (86) dans le dit bloc en plastique au moment du moulage par injection du bloc, les dites zones d'extrémités des gorges étant portées par les jambes et positionnant ces zones d'extrémité pour définir un plan de référence x-y.

27. Procédé selon la revendication 26, dans lequel l'étape de fourniture du bloc d'un moyen de blocage d'un outil d'usinage par électro-érosion comporte la formation d'une cavité (36) ouverte vers l'extérieur de blocage d'un outil dans le bloc.

28. Procédé selon la revendication 27, dans lequel, lors de la formation du conducteur électrique, une zone est formée de celui-ci pour un contact électrique avec un outil d'usinage par électro-érosion monté ensuite sur le bloc.

29. Procédé selon la revendication 28, dans lequel la dite zone formée pour être en contact d'un outil d'usinage par électro-érosion est positionnée dans une cavité ouverte vers l'extérieur de blocage d'un outil dans le bloc pour entrer en contact d'un outil d'usinage par électro-érosion reçu dans une telle cavité pour monter l'outil sur le bloc.

30. Procédé selon la revendication 25, dans lequel, lors du moulage par injection du bloc, on forme des vides dans celui-ci pour déterminer des parois élastiques arrangées pour déterminer les dites poches de positionnement ouvertes vers l'extérieur.
